# EUROPEAN PATENT APPLICATION

(11) **EP 1 384 560 A1**
(43) Date of publication of application: **28.01.2004**
(21) Application number: 03014542.9
(22) Date of filing: 04.07.2003
(51) Int. Cl.: B29C 45/27

(54) **Mould for the injection of polymers, silicones or thermosetting materials with a self-cleaning injector and injector for the said mould**

(30) Priority: 26.07.2002 IT MI20021674
(71) Applicant: Meroni, Bruno, 20075 Lodi (IT); Fortunato, Aldo, 20063 Cernusco sul Naviglio (IT)
(72) Inventor: Meroni, Bruno, 20075 Lodi (IT)
(74) Representative: La Ciura, Salvatore

(57) **Abstract**

This invention concerns a mould for the injection of polymers, silicones or thermosetting material, consisting of:
- a body inserted into a mould seat accessible from the zone where there is the injection hollow and is provided with a feeding duct for the material to be injected and, in the inner part, with an annular element (14) perimetrically outwardly projecting;
- a jacket (15) which is inserted on this body (11) and shows at its base a threading (16) for the connection to one of the plates which form the mould, said jacket showing at its front end, an inwardly bent edge (17) which defines a undercut apt to engage said perimetrical ridge projecting outwardly from the body (11) to block in position said body (11);
- a head (18) apt to be inserted on said jacket with an injection nozzle which is placed in correspondence with the material feeding channel (12).
It is thereby obtained an injection unit consisting of fewer parts, simply to be carried out and above all which does not require to be fully disassembled when it is necessary to make cleaning and maintenance operations.

## Description

This invention proposes a mould for the injection of polymers, silicones and other thermosetting materials which is provided with a self-cleaning injector.

More in particular it is the matter of a mould having a seat accessible from the inside, ("inside" means the hollow wherein the injection takes place), and a nozzle consisting of:
a first inner body with an injection channel and a socle which is fitted into one of the plates forming the mould;
a jacket to be slipped on the said inner body and which has at its base a threading for the fixing to a mould plate and, on the upper part, an undercut which engages a corresponding projecting element provided on the inner body perimeter to block the said inner body in position; and
a head provided with an injection nozzle, which is slipped on the said jacket and the nozzle places itself in a coaxial position with respect to the injection duct, the said head being blocked in position by the mould plate wherein the injection hollow is drawn.

In case of obstruction of the injection duct due for example to an early heating of the material which has to be injected, it is sufficient to open the mould and take off the head, so that the pressure of the material which is injected, pushes out the hardened portion which blocks the channel, carrying out in this way the cleaning of the injector without the need to proceed to a complete disassembly of the unit.

A injection unit is obtained consisting of fewer parts, simple to be executed and above all which does not require the complete disassembly of the system, when it is necessary to make cleaning or maintenance operations.

For the production of pieces of silicone, polymers or thermosetting material, it is known the technique to inject fresh material into a heated mould, where the temperature causes the polymerization of the material which is hardening.

A mould of this kind is described for example in the European patent application no. 0841142 and comprises a first plate, which constitutes the actual mould, wherein it is drawn the hollow into which the material is injected, a second heating plate in contact with the previous one, a layer of insulating material and a third plate wherein a coolant flows.

These plates are kept tightly joined and are provided with a hole representing the seat of an injection nozzle, through which the material is fed.

A coolant flows inside the cooling plate through a duct located around the nozzle in order to avoid that the heat of the mould may be transmitted to the nozzle and causes a premature hardening of the material.

In this mould of known type, the nozzle is inserted from the outside, i.e. from the cooling plate side, where it is then blocked in a well-known method.

A solution similar to the above mentioned one is also described in the Austrian patent no. 481253.

Both these solutions show however the drawback to be considerably complex.

In fact, in case of cleaning or maintenance procedures, it is necessary, to withdraw the nozzle, that the entire mould be disassembled with considerable difficulties and long-lasting shutdowns of the machine.

The European patent application no. 0 995 573 of the same applicant describes an injector/mould unit for the injection of polymers, silicones and thermosetting materials comprising: a mould wherein the front plate, where the mould hollow is drawn, can be removed and wherein the mould has a seat, accessible from the front side after the removal of the first plate, wherein the nozzle is inserted. This consists of a central body wherein the injection channel is drawn, a jacket which is simply slipped on the said central body and an injection head which is slipped on the said central body and the said jacket and blocked in position by the front plate, which front plate tighten one against the other the different pieces composing the nozzle.

This known solution, which allows to remove the nozzle without disassembling the whole mould, appeared anyway to be additionally improvable.

It happens almost frequently that the material contained in the injection channel solidifies or anyway reaches an excessive density, owing to, for example, an inappropriate cooling, which obliges to stop the apparatus and disassemble the nozzle to make an accurate cleaning.

Scope of this invention is to offer a solution to this problem, by proposing a mould wherein the injector is a self-cleaning injector, that is it is structured to allow the cleaning of the injection channel without removing and disassembling the whole nozzle, but by simply opening the mould and slipping off the front head wherein the injection nozzle is drawn.

This invention will be now described in detail, by way of a non limitative example, with reference to the sole enclosed figure which shows, in axial section, an injector, according to the invention, slipped on its own mould.

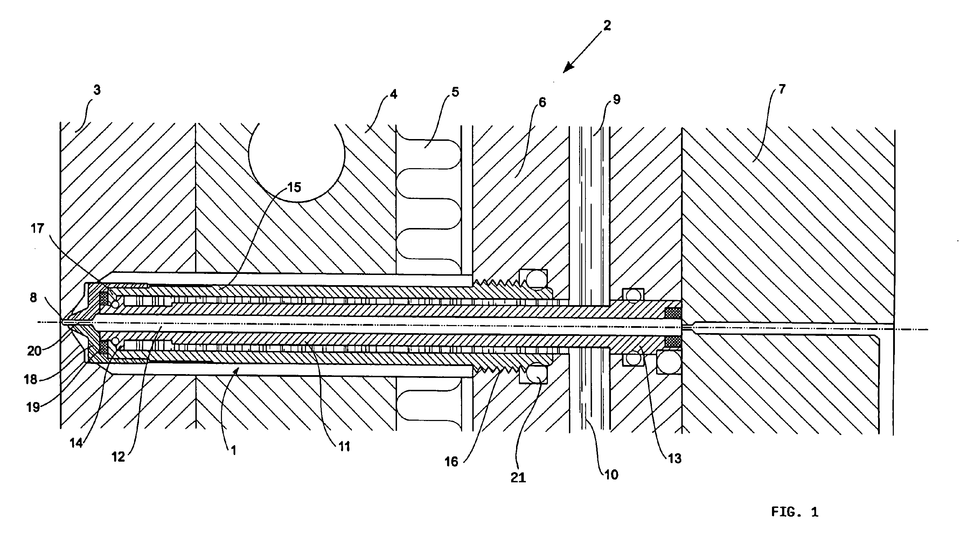

With reference to figure 1, 1 shows, in its complex, an injector according to the invention, fitted into a mould 2 which comprises a first plate or front plate 3, into which a chamber is drawn where the injection takes place, a heating plate 4 in contact with the previous one, a layer 5 of insulating material and a fourth cooling plate or external plate 6.

There are furthermore one or more feeding plates 7, wherein channels for the material feeding are drawn or a common channel from which the ducts directed to the various injectors depend.

The nozzle is fitted into a hollow obtained in this complex of plates, as it will be better described later on.

In the plate 3, in correspondence with the nozzle end, there is the injection hole 8, through which the material is injected in the mould impression.

In the plate 4 heating elements, not shown, are fitted into, such as electric resistance or the like, while in the plate 6 there are a feeding duct 9 and a coolant outlet duct 10, which is circulated around the nozzle to avoid that the heat, from the mould, can reach the injection channel and cause the early consolidation of the material.

The plates which constitute the mould are kept united and strengthened together in a known way, and the plate 3, where there is the mould hollow, is openable or removable to permit the maintenance operations and the easy replacement of the nozzle.

It is furthermore possible to easily remove the incrustations which form owing to the scales present in the cooling water, which is a difficult operation in the nozzles in a sole piece, of known type.

In the plates constituting the mould, the hole is drawn which constitutes the seat into which the nozzle is fitted.

The latter comprises a central body 11 crossed by an axial duct 12 which constitutes the channel which feeds the material to be injected.

The rearward 13 of the body 11, which preferably has a polygonal section, has a handle which is fitted into a corresponding seat provided for in the plate 6, with the interposition of appropriate gaskets.

The body 1 is simply slipped in its own seat and shows, at its front side, a perimetrical projecting element, for example an annular shoulder 14 or the like.

On the body 1 a jacket is fitted, which shows at its base a threading 16 and at its front side, an inwardly bent edge 17 so as to realize a undercut which, when the jacket is slipped on the body 11, engages with the front ridge 14.

A gasket element such as an o-ring or the like with the reference number 21, guarantees the sealing in the contact zone between the jacket 15 and the inner body 11.

Preferably the latter will have a polygonal section for almost all its length, except for a front portion where the central body 11 has a cylindrical section, so to realize a pathway for a coolant which comes from the feeding channel 9, flows around the central body 11 to cool it and streams through the channel 10.

This cooling systems is similar to the one described in the above mentioned European patent application no. 995573, to which reference can be made for greater details.

In the front terminal side, the jacket 15 shows a reduced diameter to allow the insertion of an injection head 18, with the interposition of a gasket 19.

In the head 18 the injection nozzle 20 is obtained and when the head is assembled, is disposed coaxially with respect to the feeding channel 12.

The working takes place in this way.

Once the mould is opened by removing the front plate 3, the central body 11 is first assembled by simply fitting the base 13 into the seat present in the plate 6.

The base 13 and the plate 6 can be cylindrical or polygonal, the latter configuration allowing, where necessary, an exact angular positioning of the injectors with respect to the channels 9 and 10 for the feeding and the issue of the coolant.

Then the jacket 15 is slipped on the body 11 and screwed, by means of the threaded base, in the seat always obtained in the plate 6.

By screwing the jacket, the front edge 17 engages with the projecting shoulder 14 of the body 1, which is then firmly blocked in its own seat.

The gasket 21 will guarantee the sealing between the two elements.

Now it is sufficient to introduce the gasket 19 and then slip the head 18 on the jacket to complete the assembly of the injectors. The head 18 will be then kept in position by the engagement with the plate 3 which, when it is tightened, pushes the head against the gasket 19 and against the injector body.

To avoid also the heat transmission from the mould body to the injector, in compliance with an advantageous characteristic of the invention, the head 18 will be preferably realized in a material with a low thermal conductivity, in particular in ceramic. The injector according to the invention can be quickly cleaned without its removal from the mould.

In fact in case of hardening of the material present in the feeding channel 12, owing to, for example, discontinuance in the electric current supply or heat transfer from the surrounding area to the injector body with the consequent consolidation of the material directed to the injection nozzle or to the presence of impurities in the material, it is sufficient to remove the front plate 3 and to slip off the head 18. Now it will be sufficient the pressure of the liquid material destined to be injected, to push the consolidated material out of the channel 12, which will remain therefore perfectly cleaned, without the necessity to remove the injector.

Once the passage is free, it will be sufficient to slip again the head 18 and close the plate 3 to continue the work, all that with an operation which requires few minutes.

A skilled in the art can be then provide for different changes and variances, which shall be considered all comprised within the scope of this invention.

## Claims

1. Mould for the injection of polymers, silicones or thermosetting material, **characterized in that** it provides for an injector consisting of:
• a body fitted into a mould seat accessible from the zone where there is the injection hollow and which is provided with a feeding duct of the material to be injected and, in the inner part, with an annular element (14) perimetrically outwardly projecting;
• a jacket (15) which slips on this body (11) and shows at its base a threading (16) for the connection to one of the plates which constitute the mould, the said jacket showing at its front end, an inwardly bent edge (17) which defines a undercut apt to engage the said perimetrical ridge (14) outwardly projecting from the body (11) to block in position the said body (11);
• a head (18) apt to be inserted on the said jacket and having an injection nozzle which places in correspondence with the material feeding channel (12).

2. Mould according to claim 1, **characterized in that** the injector is inserted into a seat accessible from inside, where there is the hollow into which the injection takes place.

3. Mould according to claim 2, **characterized in that** the injection head is simply slipped on the injector body and is kept in position by the engagement with the mould plate wherein the injection hollow is obtained.

4. Mould according to claim 3, **characterized in that** the said head shows an injection nozzle that, when the injector is assembled, results to be positioned coaxially with respect to the material feeding channel.

5. Mould according to the previous claims, **characterized in that** the injection head is realized in ceramic material.

6. Nozzle, injection of polymers, silicones or thermosetting materials **characterized in that** it comprises:
• a body inserted into a mould seat accessible from the zone where there is the injection hollow and which is provided with a feeding duct for the material to be injected and, in the inner part, with an annular element (14) perimetrically projecting outwardly;
• a jacket (15) which slips on the said body (11) and shows at its base a threading (16) for the connection to one of the plates which form the mould, the said jacket showing at its front end a inwardly bent edge (17) which defines a undercut apt to engage said perimetrical ridge projecting outwardly from the body (11) to block in position said body (11);
• a head (18) apt to be inserted on said jacket, with an injection nozzle which is placed in correspondence with the material feeding channel (12).
